(19) Europäisches Patentamt / European Patent Office / Office européen des brevets

(11) **EP 4 518 095 A1**

(12) **EUROPEAN PATENT APPLICATION**
published in accordance with Art. 153(4) EPC

(43) Date of publication:
05.03.2025 Bulletin 2025/10

(21) Application number: 23822700.3

(22) Date of filing: 10.03.2023

(51) International Patent Classification (IPC):
$H02J\ 7/02^{(2016.01)}$     $H02J\ 50/20^{(2016.01)}$
$H04B\ 5/00^{(2024.01)}$     $H02J\ 50/90^{(2016.01)}$

(52) Cooperative Patent Classification (CPC):
H02J 7/02; H02J 50/00; H02J 50/20; H02J 50/27;
H02J 50/40; H02J 50/80; H02J 50/90; H04B 5/00

(86) International application number:
PCT/CN2023/080887

(87) International publication number:
WO 2023/241128 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 13.06.2022 CN 202210663259

(71) Applicant: ZTE Corporation
Shenzhen, Guangdong 518057 (CN)

(72) Inventor: ZHANG, Yongliang
Shenzhen, Guangdong 518057 (CN)

(74) Representative: Cristinelli, Luca et al
Jacobacci & Partners S.p.A.
Corso Emilia, 8
10152 Torino (IT)

(54) **WIRELESS CHARGING APPARATUS AND METHOD THEREFOR, ELECTRONIC DEVICE AND STORAGE MEDIUM**

(57) The present disclosure provides a wireless charging apparatus. The wireless charging apparatus comprises a charging module carrier and a plurality of wireless charging modules, wherein the wireless charging module comprises a positioning sub-module and a charging sub-module; the charging sub-module comprises at least one wireless charging receiving antenna; the positioning sub-module is used for determining the position of a wireless charging transmitting apparatus; the plurality of wireless charging modules are respectively arranged at a plurality of installation positions of the charging module carrier; and the positioning sub-module is further used for sending position information of each wireless charging receiving antenna to the wireless charging transmitting apparatus after the position of the wireless charging transmitting apparatus is determined. The present disclosure further provides a method for controlling the wireless charging apparatus, an electronic device, and a computer-readable storage medium.

Fig. 1

EP 4 518 095 A1

## Description

### Cross-Reference to Related Application

The disclosure claims the priority of Chinese Patent Application No. CN202210663259.9, filed on June 13, 2022 and entitled "Wireless charging apparatus and method therefor, electronic device and storage medium", which is incorporated in its entirety herein by reference.

### Technical Field

The disclosure relates to the technical field of wireless charging, and particularly relates to a wireless charging apparatus, a method for controlling the wireless charging apparatus, an electronic device including the wireless charging apparatus, and a computer-readable storage medium.

### Background

As the microelectronics technology and communication develop, the wireless charging technology has been applied to a wide variety of electronic devices. For example, a cell phone terminal can be provided with a wireless charging receiving antenna, and a wireless charging signal can be provided for the wireless charging receiving antenna through a wireless charging transmitting apparatus, so the cell phone terminal can be charged. The current wireless charging technology based on radio-frequency antenna receiving and transmitting generally has the problem of low charging efficiency.

### Summary

An objective of the disclosure is to provide a wireless charging apparatus, a method for controlling the wireless charging apparatus, an electronic device including the wireless charging apparatus, and a computer-readable storage medium.

As a first aspect of the disclosure, a wireless charging apparatus is provided. The wireless charging apparatus includes a charging module carrier and a plurality of wireless charging modules, where each wireless charging module includes a positioning submodule and a charging submodule, the charging submodule includes at least one wireless charging receiving antenna, the positioning submodule is configured to determine a position of a wireless charging transmitting apparatus, the plurality of wireless charging modules are arranged at a plurality of mounting positions of the charging module carrier respectively, and the positioning submodules are further configured to transmit position information of the wireless charging receiving antennas to the wireless charging transmitting apparatus after the position of the wireless charging transmitting apparatus is determined.

As a second aspect of the disclosure, a method for controlling a wireless charging apparatus is provided. The wireless charging apparatus is the wireless charging apparatus according to the first aspect of the disclosure. The method includes:

determining position information of a wireless charging transmitting apparatus by each of positioning submodules;

transmitting position information of wireless charging receiving antenna of each of charging submodules to the wireless charging transmitting apparatus by each of the positioning submodules; and

performing beam training on at least one wireless charging receiving antenna, and achieving beam pairing between the corresponding wireless charging receiving antenna and the wireless charging transmitting apparatus.

As a third aspect of the disclosure, an electronic device is provided. The electronic device includes a wireless charging apparatus, a processor and a storage module, where the wireless charging apparatus is the wireless charging apparatus according the first aspect of the disclosure, and the storage module stores an executable program; and the method according to the second aspect of the disclosure may be executed when the executable program is called by the processor.

As a fourth aspect of the disclosure, a computer-readable storage medium is provided. The computer-readable storage medium stores an executable program, where the method according to the second aspect of the disclosure may be implemented when the executable program is called.

## Brief Description of the Drawings

Fig. 1 is a schematic diagram of an embodiment of a wireless charging apparatus according to the disclosure;

Fig. 2 is a schematic block diagram of an embodiment of a wireless charging apparatus according to the disclosure;

Fig. 3 is a schematic diagram of an embodiment of a first rectifying circuit according to the disclosure;

Fig. 4 is a schematic diagram of a beacon antenna;

Fig. 5 is a schematic diagram of a wireless charging module;

Fig. 6 is a schematic flowchart of determining a wireless charging transmitting apparatus for charging in a scenario of a plurality of wireless charging transmitting apparatuses;

Fig. 7 is a schematic diagram of an embodiment in which a plurality of beacon antennas select plurality of wireless charging transmitting apparatus;

Fig. 8 is a schematic diagram of an embodiment of a method according to the disclosure;

Fig. 9 is a schematic diagram of another embodiment of a method according to the disclosure;

Fig. 10 is a schematic diagram of an embodiment of an electronic device according to the disclosure;

Fig. 11 is a schematic diagram of charging an electronic device provided in the disclosure by using a plurality of millimeter wave charging piles; and

Fig. 12 is a schematic diagram showing that an electronic device having a wireless charging transmitting antenna is charged and charges other electronic devices.

## Detailed Description of the Embodiments

In order to enable those skilled in the art to better understand the technical solutions of the disclosure, a wireless charging apparatus, a method for controlling the wireless charging apparatus, an electronic device including the wireless charging apparatus, and a computer-readable storage medium provided in the disclosure are described in detail below with reference to the accompanying drawings.

Illustrative examples will be described more fully hereinafter with reference to the accompanying drawings, but the illustrative examples shown may be embodied in different forms, and the disclosure should not be construed as limited to the examples set forth herein. Instead, these examples are provided for the purpose of making the disclosure thorough and complete, and will enable those skilled in the art to fully understand the scope of the disclosure.

All the examples of the disclosure and features in the examples can be combined mutually without conflict.

As used herein, the term "and/or" includes one or any and all possible combinations of a plurality of associated items listed.

The terms used in the disclosure are merely to describe the specific examples, instead of limiting the disclosure. As used herein, the singular forms "a" and "the" are also intended to include the plural forms, unless clearly indicated otherwise in the context. It should also be understood that the terms "comprises" and/or "made from" when used in the description specify the presence of features, integers, steps, operations, elements, and/or assemblies, but do not preclude the presence or addition of one or more other features, integers, steps, operations, elements, components, and/or their groups.

Unless defined otherwise, all the terms (including technical and scientific terms) used herein have the same meaning as commonly understood by those of ordinary skill in the art. It is also to be understood that the terms, such as those defined in commonly used dictionaries, should be interpreted as having the same meaning as in the context of the relevant art and the disclosure, instead of the idealized or overly-formal meaning unless clearly defined herein.

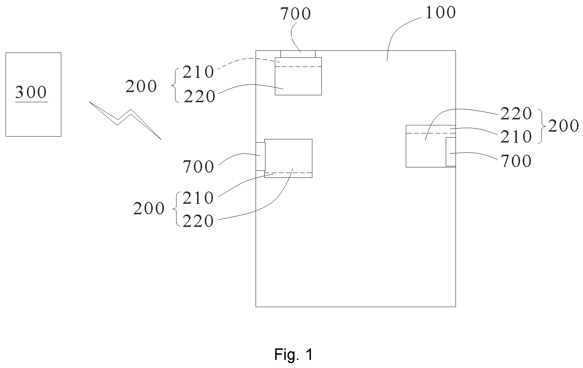

As a first aspect of the disclosure, a wireless charging apparatus is provided. As shown in Fig. 1, the wireless charging apparatus includes a charging module carrier 100 and a plurality of wireless charging modules 200. Each wireless charging module 200 includes a positioning submodule 210 and a charging submodule 220. The charging submodule 220 includes at least one wireless charging receiving antenna. The positioning submodule 210 is configured to determine a position of a wireless charging transmitting apparatus 300. The plurality of wireless charging modules 200 are arranged at a plurality of mounting positions of the charging module carrier 100 respectively. The positioning submodules 210 are further configured to transmit position information of the charging submodules 220.

In the disclosure, the wireless charging receiving antenna may be a millimeter wave antenna or another type of antennas, as long as wireless charging can be implemented.

The charging module carrier 100 of the charging apparatus is arranged on an electronic device including the charging apparatus. It should be noted that the charging module carrier 100 needs to be made of a non-shielding material. As an optional embodiment, the charging module carrier 100 may be part of a rear housing of the electronic device.

Since the plurality of positioning submodules 210 are arranged at different positions of the charging module carrier 100 respectively, each positioning submodule 210 may communicate with the wireless charging transmitting apparatus 300, such that a position of the wireless charging transmitting apparatus 300 can be quickly and accurately determined.

After the position of the wireless charging transmitting apparatus 300 is determined, the position information of the charging submodules 220 is transmitted to the charge transmitting apparatus 300, such that a relative position relation between the wireless charging transmitting apparatus 300 and the wireless charging receiving antenna of each charging submodule 220 can be further determined, so as to train beams, and implement beam pairing between the wireless charging receiving antennas and the charge transmitting apparatus 300. Since the wireless charging apparatus provided in the disclosure positions the wireless charging transmitting apparatus 300 by using the plurality of positioning submodules simultaneously, the wireless charging transmitting apparatus 300 can be positioned accurately. Accordingly, more accurate beam pairing can be implemented, and charging efficiency can be improved.

In summary, the positioning submodules 210 located at different positions improve efficiency and accuracy of positioning the wireless charging transmitting apparatus 300, such that efficiency of charging a battery by using the wireless charging apparatus can be improved.

Moreover, the wireless charging apparatus includes the plurality of charging submodules 220. Each charging submodules 220 may receive a wireless charging signal transmitted from the wireless charging transmitting apparatus 300 and convert the wireless charging signal into electric energy, thereby further improving the efficiency of charging a battery by using the wireless charging apparatus.

In the disclosure, a specific type of the charging submodules 220 is not particularly limited. As an optional embodiment, different charging submodules 220 may be wireless charging receiving antennas with different frequency bands, such that the wireless charging receiving antennas with different frequency bands may be matched.

An optimal beam pairing angle is related to an orientation of a wireless charging antenna. As an optional embodiment, at least two different orientations of the wireless charging receiving antennas of the plurality of wireless charging modules are provided. That is to say, the wireless charging receiving antennas of the wireless charging apparatus have at least two different orientations.

For the wireless charging transmitting apparatuses 300 at different positions, beam pairing angles between at least some wireless charging receiving antennas and the wireless charging transmitting apparatuses are at or close to the optimal beam pairing angle. Thus the wireless charging transmitting apparatuses 300 may obtain relatively high charging efficiency at different positions of the wireless charging apparatus.

As mentioned above, the wireless charging receiving antennas provided in the disclosure may be millimeter wave antennas. For the millimeter wave antennas, an antenna size is proportional to a signal wavelength. In the wireless charging apparatus provided in the disclosure, the plurality of wireless charging receiving antennas are dispersed on the charging module carrier 100 rather than arranged in a whole piece, such that a space on the electronic device including the wireless charging apparatus can be reasonably used, and an overall size of the wireless charging receiving antennas can be increased.

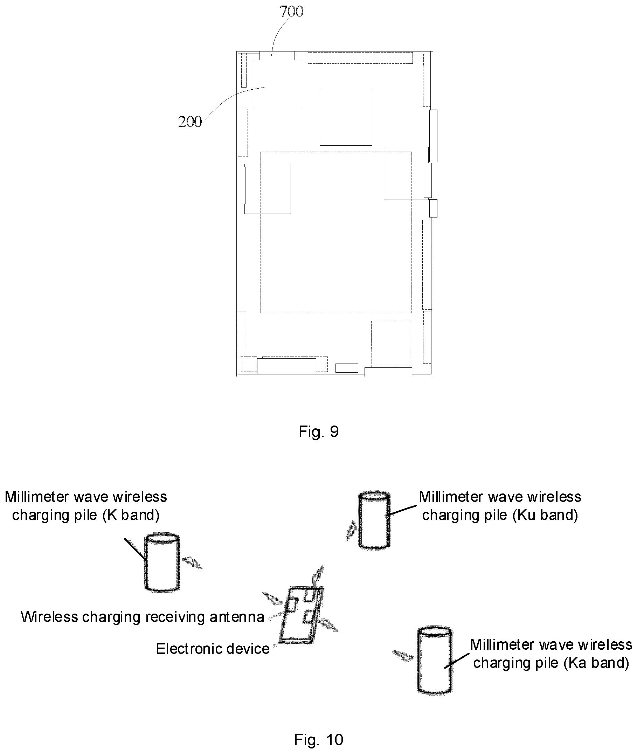

As mentioned above, the wireless charging transmitting apparatuses transmit millimeter waves. A millimeter wave frequency band range is wide, frequency bands of the wireless charging transmitting apparatuses also different, for example, Ku band, K band, Ka band, etc. Moreover, common wireless charging bands and a C band belonging to the industrial scientific medical, ISM field can also be included in the range. Correspondingly, different wireless charging antennas of the wireless charging apparatus can also use different frequency bands, such that an adaptation capability of the wireless charging apparatus can be improved. As shown in Fig. 10, the wireless charging receiving antennas with different frequency bands may correspond to millimeter wave wireless charging transmitting apparatuses 300 with different frequency bands. Thus flexibility of the wireless charging apparatus is improved effectively. Moreover, through such arrangement, the wireless charging apparatus may work in environmental scenarios of the millimeter wave wireless charging apparatuses with different frequency bands, and the millimeter wave wireless charging apparatus with different frequency bands may be used to charge electronic device.

In the disclosure, a specific structure of the wireless charging receiving antennas is not particularly limited. As an optional embodiment, each wireless charging receiving antenna includes an array formed by arranging a plurality of first antenna array elements. The orientation of the wireless charging receiving antenna may refer to an orientation of the first antenna array elements in the array.

As an optional embodiment, the charging submodule 220 includes the plurality of wireless charging receiving antennas. The orientations of the first antenna array elements in the same wireless charging receiving antenna are the same, and the orientations of the first antenna array elements in different wireless charging receiving antennas are different. For example, the same charging submodule may include a wireless charging receiving antenna oriented in a first direction (that is, the orientation of the first antenna array elements in the wireless charging antenna are the first direction), a wireless charging receiving antenna oriented in a second direction (that is, the orientation of the first antenna array elements in the wireless charging antenna are the second direction), and a wireless charging receiving antenna oriented in a third direction (that is, the orientation of the first antenna array elements in the wireless charging antenna is the third direction).

In the disclosure, the position information of the wireless charging receiving antennas is not particularly limited. For example, the position information of the wireless charging antennas may include absolute position information of the wireless charging apparatus, or may be distribution information of relative positions between the plurality of wireless charging receiving antennas. In order to quickly determine the position information of the wireless charging receiving antennas, in the embodiment, the position information of the wireless charging receiving antennas includes distribution information of relative positions between the plurality of the wireless charging receiving antennas. After the distribution information of relative positions between the plurality of wireless charging receiving antennas is transmitted to the wireless charging transmitting apparatus 300, the wireless charging transmitting apparatus can advantageously implement coarse alignment for all wireless charging receiving antennas.

When the electronic device where the wireless charging apparatus is arranged is a display apparatus (for example, a mobile phone or a tablet personal computer), an orientation of a display surface is a forward direction, a direction opposite to the orientation of the display surface is referred to as a backward direction (or a backward straight direction), a direction perpendicular to the display surface is referred to as a lateral direction, and a direction between the backward direction and the lateral direction is referred to as an oblique direction (or a backward oblique direction). In the embodiment, the same charging submodule may include a wireless charging receiving antenna oriented in the backward direction, a wireless charging receiving antenna oriented in the lateral direction, and a wireless charging receiving antenna oriented in the backward oblique direction. In a case that the display apparatus has a frame, the wireless charging apparatus may further include a wireless charging receiving antenna oriented in the forward direction.

As an optional embodiment, in the wireless charging receiving antenna, the first antenna array elements oriented in a same direction may be arranged as a uniform planar array, UPA. That is to say, the same wireless charging receiving antenna may include a plruality of uniform planar arrays.

The wireless charging transmitting apparatuses are typically concentrated in a specific region. For example, in a certain charging area, a plurality of wireless charging transmitting apparatuses are provided. In the disclosure, each wireless charging antenna may be a massive multiple-in multiple-out, MIMO antenna. Thus in the wireless charging apparatus provided in the disclosure, signal energy may be concentrated in an extremely narrow beam in space, and accurately directs to the plurality of wireless charging transmitting apparatuses (for example, millimeter wave wireless charging transmitting apparatuses). A propagation distance in the direction may be maximized, such that overall charging efficiency may be improved.

For example, one wireless charging receiving antenna may be a massive MIMO antenna including 128 first antenna array elements. During wireless charging, a beam pattern of a corresponding base station may form 8 narrow beams facing the wireless charging apparatus at 8 angles. Millimeter wave wireless charging transceiving beam pairs that are very close to each other in a region of -30°to 0° may also be accurately distinguished. In an embodiment including a plurality of charging submodules, millimeter wave wireless charging beam pairs of more azimuth angles may be generated. In an environment where a millimeter wave reflecting intelligent surface, RIS is provided, alignment of the millimeter wave wireless charging transceiving beam pairs is more favorable, and charging efficiency is improved.

In the disclosure, the wireless charging antennas arranged in a dispersed manner may be configured as multi-directional scanning beams. Under the condition that the arrays composed of different first antenna array elements face different directions, even if the electronic device (for example, mobile phone) including the wireless charging apparatus is disturbed in a specific direction during use, there are still wireless charging receiving antennas capable of performing wireless charging, such that wireless charging may be guaranteed to the greatest extent without interruption.

As an optional embodiment, the plurality of first antenna array elements in different charging submodules are arranged in a same manner. For example, each charging submodule may include a wireless charging receiving antenna oriented in the first direction, a wireless charging receiving antenna oriented in the second direction, and a wireless charging receiving antenna oriented in the third direction. During beam training, the wireless charging receiving antennas with the same orientation are trained together, such that training efficiency can be improved.

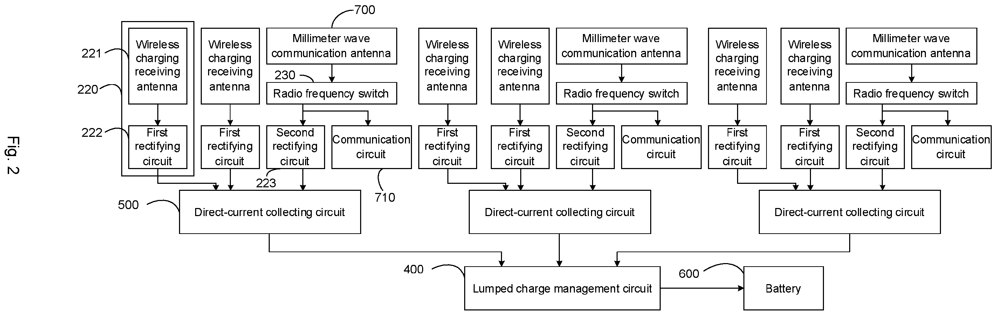

In the disclosure, after the wireless charging receiving antennas receive the charging signal (for example, a millimeter wave signal) transmitted from the wireless charging transmitting apparatuses 300, the charging signal may be directly rectified and equalized to obtain a direct current signal, and then the wireless charging apparatus may charge a power supply of the electronic device by using a converted current. To supply a current to the power supply of the electronic device conveniently, optionally, as shown in Fig. 2, the charging submodule 220 further includes a plurality of first rectifying circuits 222. In the same charging submodule 220, the plurality of first rectifying circuits 222 correspond one to one to the plurality of wireless charging receiving antennas 221. The first rectifying circuits 222 are electrically connected to corresponding wireless charging receiving antennas 221. That is to say, in the wireless charging apparatus, the plurality of first rectifying circuits 222 are connected in parallel.

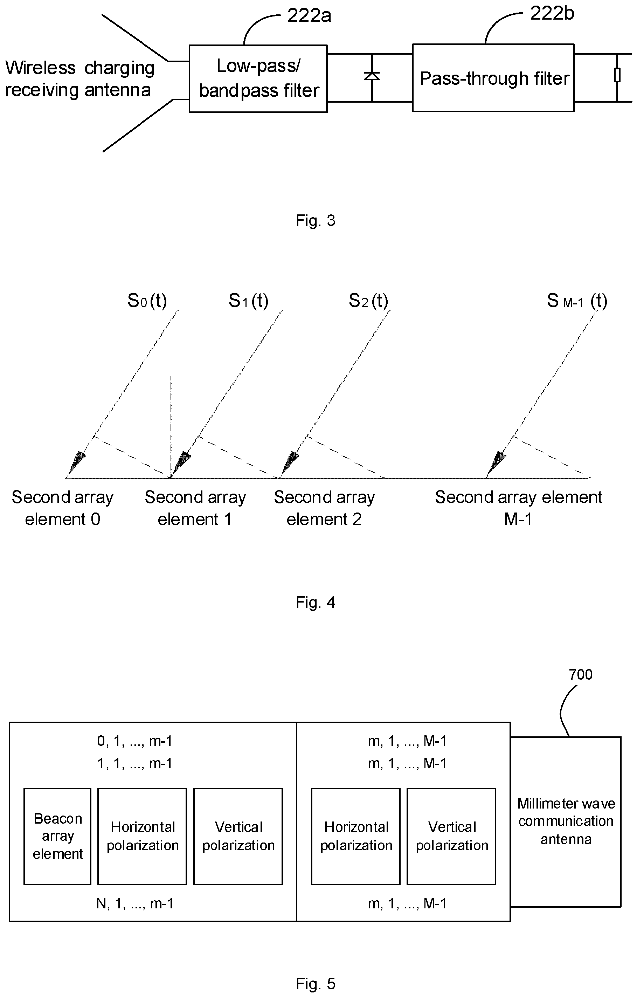

In the disclosure, a specific structure of the first rectifying circuits is not particularly limited. As shown in Fig. 3, each first rectifying circuit 222 may include a low-pass/bandpass filter 222a, a rectifying diode, and a pass-through filter 222b. In the embodiment, the wireless charging receiving antennas 221 and the first rectifying circuits 222 are highly integrated. A core device of each first rectifying circuit 222 is the rectifying diode. The low-pass/bandpass filter 222a is configured to reflect higher harmonics generated by the rectifying diode, and the pass-through filter 222b allows only a direct current to pass through.

Certainly, the disclosure is not limited thereto. The charging signal received by the wireless charging receiving antenna may be reduced to an intermediate frequency first, and then rectified and equalized to finally form a direct current signal. That is to say, the charging submodule may further includes a frequency reduction unit electrically connected between the wireless charging receiving antenna and the first rectifying circuit. The frequency reduction unit is configured to reduce the charging signal received by the wireless charging receiving antenna to an intermediate frequency.

In order to further facilitate charging of the power supply (for example, the battery 600) of the electronic device, the wireless charging apparatus further includes a lumped charge management circuit 400 and a plurality of direct-current collecting circuits 500.

The plurality of wireless charging modules 200 correspond one to one to the plurality of direct-current collecting circuits 500. Input ends of the direct-current collecting circuits 500 are electrically connected to the first rectifying circuits 222 of the corresponding wireless charging modules 200, and output ends of the direct-current collecting circuits 500 are electrically connected to an input end of the lumped charge management circuit 400.

The lumped charge management circuit 400 is configured to integrate received electrical signals, so as to output a charging current satisfying predetermined conditions.

An output end of the lumped charge management circuit 400 may be electrically connected to the battery 600, so as to charge the battery 600.

It should be pointed out that a function of the direct-current collecting circuit 500 is not only to collect a direct current, but another important function of the direct-current collecting circuit is to coordinate and equalize charging signals (charging signals are currents or voltages) in a wireless charging process, especially in a constant current stage and a constant voltage stage, so as to guarantee the smooth and stable wireless charging process. Specifically, when the wireless charging modules 200 include millimeter wave antenna arrays, the plurality of wireless charging modules 200 form a multi-planar array of millimeter wave wireless charging. The multi-planar array of millimeter wave wireless charging is prone to current/voltage fluctuation not only in a process of beam switching and alignment recovery, but also after the process of beam switching and alignment recovery because some millimeter wave antenna arrays or sub planar arrays cannot continue to work due to signal blocking caused by position change. In this case, the direct-current collecting circuits 500 of the plurality of millimeter wave antenna arrays can cooperate with each other in real time to supplement and adjust a direct collecting current/voltage between them, such that it is guaranteed that the overall charging current and voltage of the lumped charge management circuit 400 are kept stable. For example, when absence of the direct-current collecting circuits 500 of the millimeter wave antenna arrays for time sharing of a millimeter wave rectifying circuit having a communication function causes voltage or current fluctuation, shift work distribution is performed on the millimeter wave antenna planar array, and power distribution after millimeter wave rectification is coordinated between themselves, such that stability during millimeter wave wireless charging is guaranteed.

The direct-current collecting circuits 500 of the millimeter wave antenna arrays specifically equalize the current/voltage as follows:

step one, current and voltage measurement values of the direct-current collecting circuits 500 of the millimeter wave antenna arrays are transmitted to each other through mutual handshake equalization signals, an error interval is established, and direct-current collection is performed independently in the error interval, where parameter checking conditions of the error interval may be preset, for example, the parameter checking conditions may include at least one of the following parameters: a control parameter of a radio frequency switch (which will be introduced later), current and voltage mutations of a specific rectifying circuit, etc.;

step two, when the current and voltage measurement values of a direct-current collecting circuit are obviously beyond the error interval, according to the error value, another or some direct-current collecting circuits immediately establish difference compensation; and

step three, when a compensated error value is controlled within the error interval, the overall charging current or voltage maintains an existing current-voltage charging mechanism; and when the compensated error value and the error value is still beyond the error interval, the overall charging current or voltage is reported to a system processor, and the overall charging current or charging voltage is decreased or increased by the system processor.

In the disclosure, how the positioning submodules 210 position the wireless charging transmitting apparatuses 300 is not particularly limited. As an optional manner, each positioning submodule 210 includes at least one beacon antenna. The beacon antenna broadcasts a handshake message and receives a handshake success message returned by the wireless charging transmitting apparatus 300.

When the positioning submodule 210 receives the handshake success message, a position of the wireless charging transmitting apparatus 300 may be determined according to the handshake success message. Typically, in the disclosure, the plurality of millimeter wave array beacon antennas are provided. Under the condition that the relative positions between the beacon antennas are determined, a distance and angle of the wireless charging transmitting apparatus 300 are calculated through associated handshake message information of the plurality of beacon antennas, such that the position of the wireless charging transmitting apparatus 300 is determined. After the position of the wireless charging transmitting apparatus 300 is determined, the positioning submodule 210 may further transmit the position information of the wireless charging receiving antennas to the wireless charging transmitting apparatus 300.

In the disclosure, a specific structure of the beacon antennas is not particularly limited. As an optional embodiment, each beacon antenna includes an array formed by arranging a plurality of second antenna array elements. Orientations of the second antenna array elements in the same beacon antenna are the same, and orientations of the second antenna array elements in different beacon antenna arrays are different.

In order to simplify a structure of the wireless charging apparatus, as an optional embodiment, the number of the beacon antennas is not greater than the number of orientations of the first antenna array elements of the wireless charging receiving antennas. That is to say, each beacon antenna corresponds to at least one wireless charging receiving antenna. For convenience of description, the wireless charging receiving antenna corresponding to the beacon antenna is referred to as a target wireless charging receiving antenna. In order to provide more accurate position information of the wireless charging receiving antenna for the wireless charging transmitting apparatus, optionally, an angle between the orientation of the beacon antenna and an orientation of the target wireless charging receiving antenna (that is, the wireless charging receiving antenna corresponding to the beacon antenna) is not beyond a predetermined angle.

In the disclosure, the predetermined angle is not particularly limited. For example, the predetermined angle may be selected from an angle of 0° to 45°. As a preferred embodiment, the orientation of the beacon antenna is the same as the orientation of the corresponding wireless charging receiving antenna. In the disclosure, closely-oriented wireless charging receiving antennas may share a beacon antenna. For example, a wireless charging receiving antenna oriented in the backward oblique direction may share a signal antenna with a wireless charging receiving antenna oriented in the lateral direction.

As an optional embodiment, the number of the beacon antennas is the same as the number of orientations of the first antenna array elements in the wireless charging receiving antennas, that is to say, the first antenna array elements of each orientation correspond to one beacon antenna. When the wireless charging receiving antennas include the first antenna array elements of M orientations, the wireless charging apparatus also includes M beacon antennas.

For example, when the wireless charging apparatus includes a first antenna array element oriented in a first direction, a first antenna array element oriented in a second direction, and a first antenna array element oriented in a third direction, the wireless charging apparatus may include beacon antennas oriented in three directions, that is, a beacon antenna oriented in the first direction, a beacon antenna oriented in the second direction, and a beacon antenna oriented in the third direction.

As another optional embodiment, the number of the beacon antennas is less than the number of the orientations of the first antenna array elements of the wireless charging receiving antennas. For example, when the wireless charging receiving antennas include the first antenna array elements of M orientations, the wireless charging apparatus includes N beacon antennas, and N < M.

In the above embodiment, the closely-oriented first antenna array elements share a same beacon antenna. With an electronic device including a wireless charging apparatus as an example, when the wireless charging apparatus is provided with a first antenna array element oriented in the backward direction, a first antenna array element oriented in the lateral direction, and a first antenna array element oriented in the backward oblique direction (that is, M = 3), a beacon antenna oriented in the backward direction and a beacon antenna oriented in the lateral direction may be provided (that is, N = 2), and the first antenna array element oriented in the backward oblique direction and the first antenna array element oriented in the lateral direction share the same beacon antenna.

In the disclosure, the specific number of the beacon antennas is not particularly limited. The beacon antennas are in a low power consumption mode for position broadcasting, the number of the beacon antennas is reduced, and overall energy consumption of the electronic device including the wireless charging apparatus can be reduced.

As an optional embodiment, the second antenna array elements of the beacon antenna are arranged in a uniform linear array, ULA form.

One beacon antenna may include M second antenna array elements. As shown in Fig. 4, the M second antenna array elements are uniformly distributed in a linear array at intervals d, a signal arrival angle is $\theta$, and a time difference $\tau$ of adjacent signals may be calculated by the following formula (1):

$$\tau = d * \sin\theta/c \tag{1}$$

where c is an electromagnetic wave propagation velocity, which is $3 * 10^8$ m/s.

Signal received by each of second antenna array elements take a second antenna array element numbered 0 as a reference, and the signal $S_m(t)$ received by the second antenna array element numbered m is shown in formula (2):

$$S_m(t) = S_0(t - m * \tau) \tag{2}$$

where m is an integer, and m = 0, 1, ..., M - 1.

A signal y(t) received by the linear array at moment t is shown in formula (3):

$$y(t) = [S_0(t),..., S_m(t),..., S_{M-1}(t)] \tag{3}$$

When a narrowband signal is received, the signal y(t) received by the linear array at moment t is shown in formula (4):

$$y(t) = w^H\alpha(\theta)S(t) \tag{4}$$

where $w^H$ is a beamforming weighting vector; and

$\alpha(\theta)$ is a steering vector reaching the angle $\theta$.

Finally, beam forming is received by means of M-phase interferometry.

In the above embodiment, the beacon antenna includes the second antenna array elements arranged as an ULA, and another form of the beacon antenna is described below. In the embodiment, in order to enhance signal transceiving performance, the beacon antenna includes not only a single dipole ULA, but also a horizontally polarized and vertically polarized crossed arrays which form a UPA. That is to say, the beacon antenna includes a ULA formed by arranging the plurality of second antenna array elements and a uniform planar array, UPA formed by arranging the plurality of second antenna array elements.

In the disclosure, the electronic device to which the wireless charging receiving antennas is applied is not particularly limited. The electronic device may be a mobile communication device having a 5G communication function. Accordingly, the mobile communication device has a millimeter wave communication antenna 700. Since an antenna array element of the millimeter wave communication antenna 700 has a same structure as the first antenna array element of the wireless charging receiving antenna, in order to improve charging efficiency and simplify the structure of the wireless charging apparatus, the millimeter wave communication antenna 700 may optionally be reused as the wireless charging receiving antenna.

Accordingly, the wireless charging module 220 may further include a second rectifying circuit 223 to allow the millimeter wave communication antenna 700 to be selectively electrically connected to one of a communication circuit corresponding to the millimeter wave communication antenna 700 and the second rectifying circuit 223. When the millimeter wave communication antenna 700 is connected to the communication circuit 710, the millimeter wave communication antenna 700 may implement a data transmission function of a mobile communication terminal. When the millimeter wave communication antenna 700 is connected to the second rectifying circuit 223, the millimeter wave communication antenna 700 is used as a wireless charging antenna.

As an optional embodiment, the millimeter wave communication antenna 700 may be reused as a wireless charging receiving antenna in a time-sharing manner.

In the disclosure, how to switch the functions of the millimeter wave communication antenna is not particularly limited. As an optional embodiment, the wireless charging module may further include a radio frequency switch 230. A first end of the radio frequency switch 230 is electrically connected to the millimeter wave communication antenna. A second end of the radio frequency switch 230 is electrically connected to the second rectifying circuit 223. A third end of the radio frequency switch 230 is electrically connected to the millimeter wave communication circuit. The first end of the radio frequency switch 230 is connected to the second end of the radio frequency switch 230 when a control end of the radio frequency switch 230 receives a first control signal such that the millimeter wave communication antenna can be electrically connected to the second rectifying circuit 223. The first end of the radio frequency switch 230 is connected to the third end of the radio frequency switch 230 when the control end of the radio frequency switch 230 receives a second control signal, such that the millimeter wave communication antenna can be electrically connected to the communication circuit.

In order to avoid interference between a charging function and a communication function, in the embodiment where the millimeter wave communication antenna is reused as the wireless charging receiving antenna, a charging signal received by the millimeter wave communication antenna reused as the wireless charging receiving antenna may be first reduced to an intermediate frequency and then rectified to form a direct current signal. That is to say, the wireless charging module may further include the frequency reduction unit electrically connected between the millimeter wave communication antenna and the second rectifying circuit. The frequency reduction unit is configured to reduce a charging signal received by the millimeter wave communication antenna reused as the wireless charging receiving antenna to an intermediate frequency.

In the embodiment shown in Fig. 2, the first rectifying circuit 222 and the second rectifying circuit 223 in the same wireless charging module 200 are electrically connected to the same direct-current collecting circuit 500.

The direct-current collecting circuits 500 corresponding to different wireless charging modules 200 may be electrically connected in parallel, in series, or in a combination of parallel and series.

As an optional embodiment, the wireless charging apparatus further includes at least one wireless charging signal transmitting module. The wireless charging signal transmitting module is arranged on the charging module carrier. By arranging the wireless charging signal transmitting module, the wireless charging apparatus provided in the disclosure may also have a function of charging other devices.

In the disclosure, a specific structure of the wireless charging signal transmitting module is not particularly limited. As an optional embodiment, the wireless charging signal transmitting module includes a wireless charging signal transmitting antenna. Optionally, the wireless charging signal transmitting antenna may include a plurality of third antenna array elements arranged in an array. Optionally, a structure of each third antenna array element is the same as the structure of the first antenna array element, such that the wireless charging signal transmitting antenna may also be reused as the wireless charging receiving antenna.

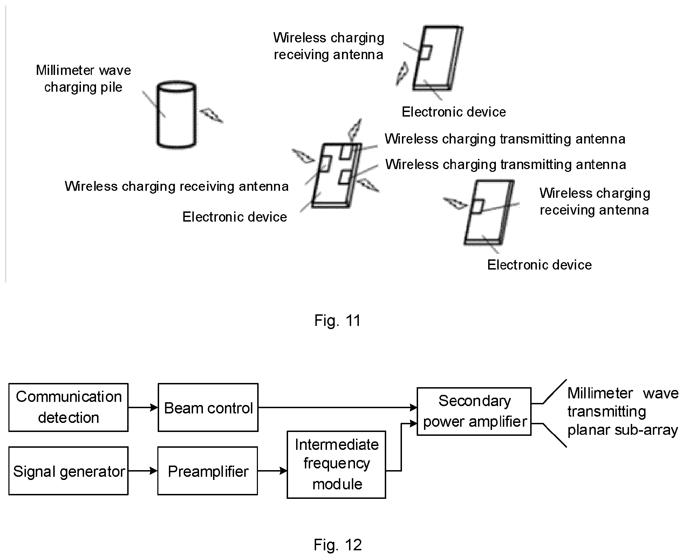

As shown in Fig. 11, the electronic device having the wireless charging signal transmitting antenna may charge an electronic device having the wireless charging receiving antenna while being charged by means of the wireless charging transmitting apparatus.

As shown in Fig. 12, when the wireless charging apparatus has a wireless charging transmitting antenna for wireless charging transmission, a parameter of direction control required for beam control need to be input through a communication detection circuit. Moreover, a millimeter wave wireless charging signal generated by a signal generator is converted into an intermediate frequency module by a preamplifier, and then electric energy is converted into millimeter wave energy by an emitter secondary power amplifier and emitted from the wireless charging transmitting antenna.

When a millimeter wave band is higher, a second amplifier is sometimes not enough, and a third amplifier is needed.

In the above embodiment, the intermediate frequency module is necessary. Furthermore, the millimeter wave communication antenna may also be reused as the wireless charging transmitting antenna.

Fig. 5 is a schematic diagram of a wireless charging module 200. The wireless charging module 200 includes two charging submodules and a positioning submodule. The first charging submodule includes a wireless charging antenna oriented in the backward straight direction, and the second charging submodule includes a wireless charging antenna oriented in the backward oblique direction. Moreover, in the embodiment shown in Fig. 5, the wireless charging module 200 further corresponds to a millimeter wave communication antenna. The millimeter wave communication antenna is oriented in the lateral direction.

In the embodiment shown in Fig. 5, the millimeter wave communication antenna may be reused as the wireless charging receiving antenna. The millimeter wave communication antenna may be used as a beacon antenna of the second charging submodule.

Moreover, a first antenna array element of the wireless charging antenna of the first charging submodule and a second antenna array element of a corresponding beacon antenna are arranged as a UPA. Moreover, the number of the first antenna array elements of the wireless charging antenna 221 and the second antenna array elements of the corresponding beacon antenna 211 is 144 in total. The structure of the first antenna array elements is the same as that of the second antenna array elements. For convenience of description, the first antenna array elements and the second antenna array elements are collectively referred to herein as antenna array elements. The 144 antenna array elements are planned into 4 radio frequency channels. Each radio frequency channel includes 36 antenna array elements, 12 antenna array elements are arranged in a first arrangement direction, and 3 antenna array elements are arranged in a second arrangement direction. The first arrangement direction is one of a transverse direction and a longitudinal direction, and the second arrangement direction is the other of the transverse direction and the longitudinal direction. A first row of antenna array elements arranged in the first arrangement direction is used as a beacon antenna (either horizontally polarized or vertically polarized). A second row of antenna array elements arranged in the first arrangement direction is horizontally polarized, and a third row of antenna array elements arranged in the first arrangement direction is vertically polarized.

In view of bandwidth limitation, 48-128 first antenna array elements of the wireless charging antenna of the second charging submodule may be provided. 24-64 first antenna array elements are arranged according to 2 radio frequency channels, 12-32 first antenna array elements are arranged in the first arrangement direction, and 2 first antenna array elements are arranged in the second arrangement direction. The first row of the first antenna array elements arranged in the first arrangement direction are horizontally polarized, the second row of the first antenna array elements arranged in the first arrangement direction are vertically polarized.

All antenna array elements of the millimeter wave communication antenna are the first antenna array elements. The first antenna array elements are arranged as a UPA. Horizontal and vertical cross polarization is generally used (compared with horizontal or vertical polarization in a single row or column, horizontal and vertical cross polarization is more conducive to space saving, that is, more total elements are allowed in a same space, and a beamforming manner is more flexible). The wireless charging antenna can be reused as a beacon antenna of the second charging submodule.

Certainly, the disclosure is not limited herein. For example, the charging device includes three wireless charging receiving antennas oriented in the backward straight direction, three wireless charging receiving antennas oriented in three different lateral directions, and three wireless charging receiving antennas oriented in the backward oblique direction (9 wireless charging receiving antennas in total). In order to simplify a structure, four beacon antennas may be provided as follows: a beacon antenna corresponding to the wireless charging receiving antennas in the backward straight direction, and three beacon antennas corresponding to the three wireless charging receiving antennas in the lateral directions. The three wireless charging receiving antennas in the backward oblique direction share the beacon antennas with the wireless charging receiving antennas in backward lateral directions closest to orientation angles respectively.

A main function of the beacon antennas is to broadcast to the wireless charging transmitting apparatus, such that the wireless charging transmitting apparatus can effectively obtain the position of the wireless charging apparatus by means of rough scanning. In the above embodiment, there are significant differences between the positions and the directions of the three beacon antennas, such that communication handshake and positioning between the wireless charging transmitting apparatus and the wireless charging apparatus can be quickly established. Furthermore, the beacon antennas with three significantly different directions or more are also conducive to improve in anti-interference performance against obstacles in a millimeter wave transmission path. Communication handshake with the wireless charging transmitting apparatus may be implemented from millimeter wave reflection multipath. Reliable assurance is provided in two dimensions of robustness and accuracy of positioning.

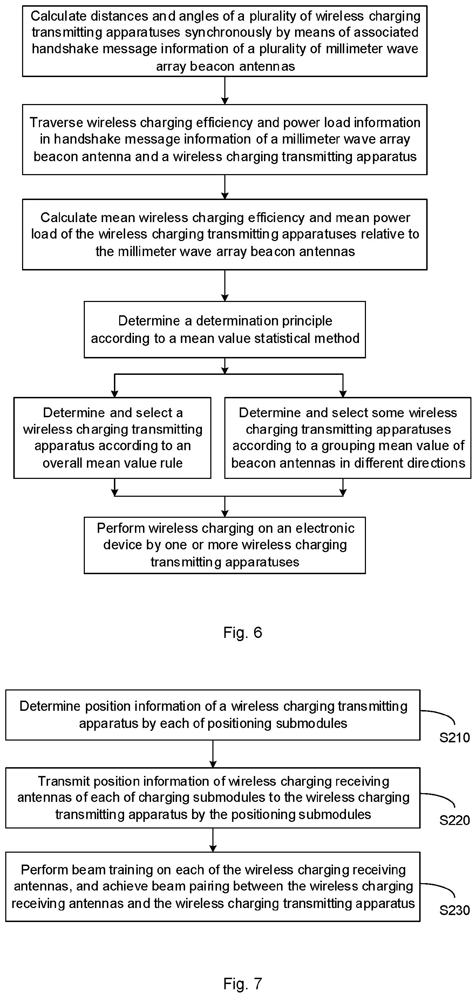

As shown in Fig. 6, in a case that the relative positions of the plurality of millimeter wave array beacon antennas (that is, the plurality of positioning submodules) in the disclosure are determined, when a plurality of wireless charging transmitting apparatuses exist in an application scenario, distances and angles of the plurality of wireless charging transmitting apparatuses 300 may be synchronously calculated through associated handshake success information of the plurality of beacon antennas, such that the plurality of wireless charging transmitting apparatuses are positioned simultaneously.

Then, by further traversing wireless charging efficiency and power load information in the handshake success information between the millimeter wave array beacon antennas and the wireless charging transmitting apparatuses 300, mean wireless charging efficiency and a mean power load of each wireless charging transmitting apparatus 300 relative to the millimeter wave array beacon antenna are calculated. Then different determination principles are established through mean value statistical methods of the mean wireless charging efficiency and the mean power load. A wireless charging transmitting apparatus 300 is determined and selected according to an overall mean value rule, and alternatively, some wireless charging transmitting apparatuses 300 are determined and selected according to grouping mean value of the beacon antennas in different directions, such that wireless charging of an electronic device having a plurality of millimeter wave array beacon antennas by one or more wireless charging transmitting apparatuses 300 is implemented.

After alignment between the wireless charging transmitting apparatus and the wireless charging apparatus is completed, only one beacon antenna may be maintained in a communication state as a whole or in a certain directional group, and the other beacon antennas are used as wireless charging receiving antennas.

As a second aspect of the disclosure, a method for controlling a wireless charging apparatus is provided. The wireless charging apparatus is the wireless charging apparatus according to the first aspect of the disclosure. As shown in Fig. 7, the method includes:

S210, position information of a wireless charging transmitting apparatus is determined by means of positioning submodules;

S220, position information of wireless charging receiving antennas of the charging submodules is transmitted to the wireless charging transmitting apparatus by means of the positioning submodules; and

S230, beam training is performed on at least one wireless charging receiving antenna, and beam pairing between the corresponding wireless charging receiving antenna and the wireless charging transmitting apparatus is achieved.

As mentioned above, since the plurality of positioning submodules 210 are arranged at different positions of the charging module carrier 100 respectively, each positioning submodule 210 may communicate with the wireless charging transmitting apparatus 300, such that a position of the wireless charging transmitting apparatus 300 can be quickly and accurately determined.

After the position of the wireless charging transmitting apparatus 300 is determined, the position information of the charging submodules 220 is transmitted to the charge transmitting apparatus 300, such that a relative position relation between the wireless charging transmitting apparatus 300 and the wireless charging receiving antenna of each charging submodule 220 can be further determined, so as to train beams, and implement beam pairing between the wireless charging receiving antennas and the charge transmitting apparatus 300. Since the wireless charging apparatus provided in the disclosure positions the wireless charging transmitting apparatus 300 by using the plurality of positioning submodules simultaneously, the wireless charging transmitting apparatus 300 can be positioned accurately. Accordingly, more accurate beam pairing can be implemented, and charging efficiency can be improved.

In summary, the positioning submodules 210 located at different positions improve efficiency and accuracy of positioning the wireless charging transmitting apparatus 300, such that efficiency of charging a battery by using the wireless charging apparatus can be improved.

Moreover, the wireless charging apparatus includes the plurality of charging submodules 220. Each charging submodules 220 may receive a wireless charging signal transmitted from the wireless charging transmitting apparatus 300 and convert the wireless charging signal into electric energy, thereby further improving the efficiency of charging a battery by using the wireless charging apparatus.

An optimal beam pairing angle is related to an orientation of a wireless charging antenna. As an optional embodiment, at least two different orientations of the wireless charging receiving antennas of the plurality of wireless charging modules are provided. That is to say, the wireless charging receiving antennas of the wireless charging apparatus have at least two different orientations.

For the wireless charging transmitting apparatuses 300 at different positions, beam pairing angles between at least some wireless charging receiving antennas and the wireless charging transmitting apparatuses are at or close to the optimal beam pairing angle. Thus the wireless charging transmitting apparatuses 300 may obtain relatively high charging efficiency at different positions of the wireless charging apparatus.

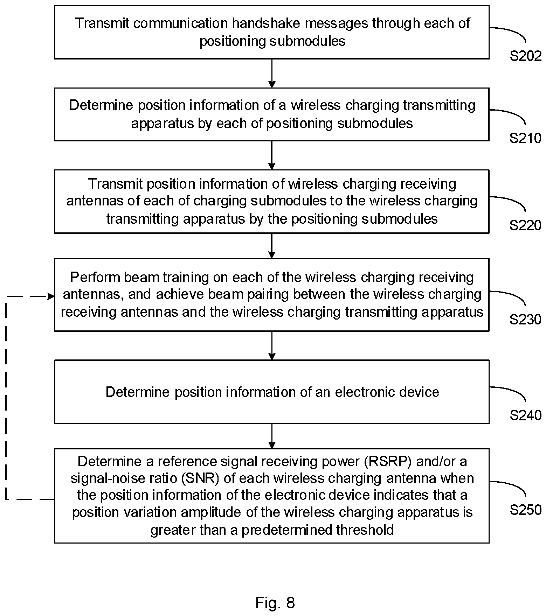

In the disclosure, how the positioning submodule determines the position information of the wireless charging transmitting apparatuses is not particularly limited. As an optional embodiment, as shown in Fig. 8, before the position information of the wireless charging transmitting apparatus is determined according to the positioning submodules (S210), the method further includes:

S202, transmit communication handshake messages through each of positioning submodules.

As mentioned above, the positioning submodules may include beacon antennas. In the embodiment, the beacon antennas may broadcast the communication handshake message.

Correspondingly, the position information of the wireless charging transmitting apparatus is determined by means of the positioning submodule (that is, S220) specifically as follows:

the position information of the wireless charging transmitting apparatus is determined according to handshake success information.

When the wireless charging apparatus includes a plurality of wireless charging receiving antennas, the position information of the wireless charging transmitting apparatus may include a relative position relation between the wireless charging receiving antennas.

As mentioned above, after the positioning submodule transmits the relative position relation between the wireless charging receiving antennas, the wireless charging transmitting apparatus may advantageously achieve rough alignment with the wireless charging receiving antennas. It should be noted that the relative position relation between the wireless charging receiving antennas mainly includes a position deviation value obtained according to design distances and angles of the wireless charging receiving antennas.

As mentioned above, the first antenna array elements are arranged in the same manner in different charging submodules. That is, in different charging submodules, there are wireless charging receiving antennas having the same orientation. The wireless charging antennas oriented in the same direction may be regarded as a same antenna group. It should be noted that the wireless charging antennas in different antenna groups have different orientations.

In order to improve charging efficiency, S230 that beam training is performed on the wireless charging receiving antennas may specifically include:

beam training is performed on the antenna groups separately.

That is, in the disclosure, the wireless charging receiving antennas of the same orientation are trained together. As an optional embodiment, a same codebook is configured to perform beam training on the wireless charging receiving antennas (in the disclosure, the wireless charging receiving antennas may also be referred to as planar sub-arrays) of the same orientation. Codebooks used for the wireless charging receiving antennas of different orientations are also different.

In the disclosure, how beam training is specifically performed is not particularly limited. For example, codebook and beam training algorithm design may be performed on the same antenna group, and wide-beam fast access may be simulated. Specifically, the codebook for beam training includes a primary codebook and a secondary codebook. Beam training includes two stages of coarse training using the primary codebook and fine training using the secondary codebook. Furthermore, the two stages are decomposed into two dimensions of a horizontal angle and a pitch angle, which are required for three dimensional, 3D beams.

After beam training is completed, fine beam adjustment may be performed on at least one wireless charging receiving antenna in the same group. For example, a small-dimensional equivalent military array after beam training of the wireless charging receiving antenna groups may be rapidly estimated according to a least square method, a mean square error or a machine learning method through a small number of pilots, so as to implement fine beam adjustment on a specific wireless charging receiving antenna in the group.

After pairing is completed, the wireless charging receiving antennas may dynamically track channel gains and beam angles based on a predictive dynamic filtering principle.

In some cases, a plurality of wireless charging transmitting apparatuses are provided. The wireless charging transmitting apparatus may carry its own wireless charging efficiency and power load information in the handshake success information.

In this way, in S210, the position information of the plurality of wireless charging transmitting apparatuses may be determined. In the disclosure, one or more of the plurality of wireless charging transmitting apparatuses may be selected to charge the electronic device. Accordingly, when the position information of the plurality of wireless charging transmitting apparatuses is determined through handshake message information of the positioning submodules, before the beam training is performed on at least one wireless charging receiving antenna, the method further includes:

wireless charging efficiency and power load information are traversed in the handshake success information;

mean wireless charging efficiency and mean power loads of the wireless charging transmitting apparatuses relative to the wireless charging modules are calculated according to wireless charging efficiency and power load information of the wireless charging transmitting apparatuses; and

a wireless charging transmitting apparatus for wireless charging is determined according to the calculated mean wireless charging efficiency and the calculated mean power load.

As mentioned above, different determination principles are established through mean value statistical methods of the mean wireless charging efficiency and the mean power load. A wireless charging transmitting apparatus 300 is determined and selected according to an overall mean value rule, and alternatively, some wireless charging transmitting apparatuses 300 are determined and selected according to grouping mean values of the beacon antennas in different directions, such that wireless charging of an electronic device having a plurality of millimeter wave array beacon antennas by one or more wireless charging transmitting apparatuses 300 is implemented.

When the electronic device (for example, mobile phone) including the wireless charging apparatus moves with a large amplitude, a channel state may change. In order to avoid charging interruption caused by movement of the electronic device, optionally, as shown in Fig. 8, after S230, the method may further include:

S240, position information of the electronic device including the wireless charging apparatus is determined.

S250, reference signal receiving power, RSRP and/or a signal-noise ratio, SNR of each wireless charging antenna are/is determined when the position information of the electronic device indicates that a position variation amplitude of the wireless charging apparatus is greater than a predetermined threshold.

Whether to execute the step that beam training is performed on the wireless charging receiving antenna is determined according to the reference signal receiving power, RSRP or the signal-noise ratio, SNR of each wireless charging receiving antenna.

For example, when the RSRP of the wireless charging antenna is low, beam training is performed again on the wireless charging antenna.

In the disclosure, how to determine the position information of the electronic device is not particularly limited. For example, the position information of the electronic device may be determined through a software calculation method.

In order to quickly determine the position information of the electronic device and improve execution efficiency of the method, optionally, the position information of the electronic device is provided by a position sensor. The position

## EP 4 518 095 A1

sensor is hardware provided on the electronic device and may accurately determine the position information of the electronic device. Compared with software calculation, reading the position information of the electronic device by the position sensor is more accurate and more efficient.

When a position change amplitude of the wireless charging apparatus exceeds a predetermined threshold, it indicates that the channel state also changes greatly. Beam training is performed again, such that higher charging efficiency can be obtained.

In the disclosure, a specific type of the position sensor is not particularly limited. The position sensor may be at least one of a gyroscope, an ultra wide band, UWB, and a Bluetooth sensor of a mobile terminal, as long as the terminal position information of the terminal can be determined.

In order to improve the charging efficiency, as an optional embodiment, as shown in Fig. 8, before S230, the method further includes:

S225, a battery level is determined.

The step that beam training is performed on the wireless charging receiving antennas is executed on the first number of charging submodules when the battery level is below a predetermined percentage of full level.

The step that beam training is performed on the wireless charging receiving antennas is executed on the second number of charging submodules when the battery level exceeds the predetermined percentage of full level. The first number is greater than the second number.

That is to say, when the battery level is low, a larger number of charging submodules are used to charge the battery. When the battery level has reached a certain level, the number of working charging submodules is reduced, and the battery is charged in a trickle mode.

As mentioned above, the millimeter wave communication antenna of the electronic device may be reused as a wireless charging receiving antenna. Moreover, the wireless charging apparatus includes a radio frequency switch. Accordingly, the method further includes:

a first control signal is generated after the wireless charging receiving antenna is beam paired with the wireless charging transmitting apparatus; and

the first control signal is transmitted to a control end of the radio frequency switch.

That is, after beam pairing is completed, the wireless charging apparatus enters a charging state. In order to improve the charging efficiency, the radio frequency switch may be controlled to electrically connect the millimeter wave communication antenna and the second rectifying circuit, such that the millimeter wave communication antenna may be used as a wireless charging receiving antenna.

When the charge level of the battery reaches a predetermined percentage of full level, the millimeter wave communication antenna may be controlled not to be used as a wireless charging receiving antenna. Accordingly, the method further includes:

a second control signal is generated when the battery level exceeds the predetermined percentage of full level; and
the second control signal is transmitted to a control end of the radio frequency switch.

After the battery level reaches a value, the millimeter wave communication antenna is electrically connected to the corresponding communication circuit through the radio frequency switch, such that the millimeter wave communication antenna can continue to implement a communication function.

As a third aspect of the disclosure, an electronic device is provided. The electronic device includes a wireless charging apparatus, a processor and a storage module, where the wireless charging apparatus is the wireless charging apparatus according the first aspect of the disclosure, and the storage module stores an executable program;.

The method provided in the second aspect of the disclosure may be executed when the executable program is called by the processor.

The processor controls the wireless charging apparatus through the method provided in the disclosure, and the wireless charging efficiency can be improved.

Optionally, the terminal includes a plurality of millimeter wave communication antennas. A number of the millimeter wave communication antennas is the same as a number of the wireless charging modules. The millimeter wave communication antennas correspond one to one to the wireless charging modules.

Fig. 9 provides a schematic structural diagram of an electronic device. In the embodiment, the electronic device is a mobile phone. As shown in the figure, the charging module carrier 100 is part of a housing of the electronic device.

Optionally, the electronic device may implement 4G communication and 5G communication. Accordingly, the electronic device may include a 4G long term evolution, LTE diversity antenna and a millimeter wave communication antenna 700. In the embodiment shown in Fig. 9, the electronic device includes 3 millimeter wave communication antennas 700 and 3 wireless charging modules.

Optionally, the electronic device may further include a near-field communication, NFC antenna, a UWB & Bluetooth, BT & WIFI antenna, a 4G LTE antenna, a Sub 6 GHz band antenna, etc.

In order to improve heat dissipation performance, a heat dissipation film may be arranged on the charging module carrier 100.

The electronic device may be any one of a mobile phone, a tablet personal computer, a central processing element, CPE, and a smart home device.

As a fourth aspect of the disclosure, a computer-readable storage medium is provided. The computer-readable storage medium stores an executable program, where the method provided in the second aspect of the disclosure may be implemented when the executable program is called.

Those of ordinary skill in the art can understand that all or some of functional modules/units in the steps, the systems, the apparatuses in the disclosed method above can be implemented as software, firmware, hardware, and their appropriate combinations. In a hardware implementation, division between functional modules/units mentioned in the above description does not necessarily correspond to a division of physical components. For example, one physical component may have a plurality of functions, or one function or step may be cooperatively executed by several physical components. Some or all of the physical components may be implemented as software executed by a processor, such as a central processing unit, a digital signal processor, or a microprocessor, or as hardware, or as an integrated circuit, such as an application specific integrated circuit. Such software may be distributed on a computer readable medium, which may include a computer storage medium (or a non-transitory medium) and a communication medium (or a transitory medium). As well known to those of ordinary skill in the art, the term of computer storage medium includes volatile, nonvolatile, removable and non-removable media implemented in any method or technology for storing information (such as a computer readable instruction, a data structure, a program module, or other data). The computer storage medium includes, but is not limited to, a random access memory, RAM, a read-only memory, ROM, an electrically erasable programmable read-only memory, EEPROM, a flash memory or other magnetic disk memories; a compact disk read-only memory, CD-ROM, a digital video disk, DVD or other optical disk memories, a magnetic cassette, a magnetic tape, a magnetic disk storage or other magnetic memories, or any other media that can be used to store desired information and can be accessed by a computer. Further, as well known to those of ordinary skill in the art, the communication medium typically contains a computer readable instruction, a data structure, a program module, or other data in a modulated data signal such as a carrier wave or other transmission mechanisms, and may include any information delivery medium.

Illustrative examples have been disclosed herein, and although specific terms are used, they are used and should be interpreted in a general illustrative sense only and not for purposes of limitation. In some instances, it will be apparent to those skilled in the art that features, characteristics, and/or elements described in connection with a particular example may be used alone or in combination with those of other examples unless explicitly stated otherwise. Accordingly, it will be understood by those skilled in the art that various changes in form and details may be made without departing from the scope of the disclosure as set forth in the appended claims.

**Claims**

1. A wireless charging apparatus, comprising a charging module carrier and a plurality of wireless charging modules, wherein each wireless charging module comprises a positioning submodule and a charging submodule, the charging submodule comprises at least one wireless charging receiving antenna, the positioning submodule is configured to determine a position of a wireless charging transmitting apparatus, the plurality of wireless charging modules are arranged at a plurality of mounting positions of the charging module carrier respectively, and the positioning submodule is further configured to transmit position information of individual wireless charging receiving antennas to the wireless charging transmitting apparatus after the position of the wireless charging transmitting apparatus is determined.

2. The wireless charging apparatus according to claim 1, wherein the wireless charging receiving antennas in the plurality of wireless charging modules have at least two different orientations.

3. The wireless charging apparatus according to claim 2, wherein the wireless charging receiving antenna comprises an array formed by arranging a plurality of first antenna array elements.

4. The wireless charging apparatus according to claim 3, wherein the charging submodule comprises a plurality of the wireless charging receiving antennas, and the orientations of the first antenna array elements in a single wireless charging receiving antenna are the same, and the orientations of the first antenna array elements in different wireless charging receiving antennas are different; and

the position information of the wireless charging receiving antennas comprises distribution information of relative positions between the plurality of the wireless charging receiving antennas.

5. The wireless charging apparatus according to claim 4, wherein the charging submodule further comprises a plurality of first rectifying circuits, in a single charging submodule, the plurality of first rectifying circuits correspond one to one to the plurality of the wireless charging receiving antennas, and the first rectifying circuits are electrically connected to corresponding wireless charging receiving antennas, so as to rectify signals received by the corresponding wireless charging receiving antennas.

6. The wireless charging apparatus according to claim 5, further comprising a lumped charge management circuit and a plurality of direct-current collecting circuits, wherein

   the plurality of wireless charging modules correspond one to one to the plurality of direct-current collecting circuits, input ends of the direct-current collecting circuits are electrically connected to the first rectifying circuits of the corresponding wireless charging modules, and output ends of the direct-current collecting circuits are electrically connected to an input end of the lumped charge management circuit; and
   the lumped charge management circuit is configured to integrate and equalize received electrical signals, so as to output a charging current or a charging voltage satisfying predetermined conditions.

7. The wireless charging apparatus according to claim 1, wherein the positioning submodule comprises at least one beacon antenna, and the beacon antenna is configured to broadcast a handshake message and receive a handshake success message returned by the wireless charging transmitting apparatus.

8. The wireless charging apparatus according to claim 7, wherein the beacon antenna comprises an array formed by arranging a plurality of second antenna array elements; and
   orientations of the second antenna array elements in a single beacon antenna are same, and orientations of the second antenna array elements in different beacon antenna arrays are different.

9. The wireless charging apparatus according to claim 8, wherein each beacon antenna corresponds to at least one wireless charging receiving antennas, an angle between an orientation of the beacon antenna and an orientation of a target wireless charging receiving antenna is not greater than a predetermined angle, and the target wireless charging receiving antenna is a wireless charging receiving antenna corresponding to the beacon antenna.

10. The wireless charging apparatus according to claim 8, wherein the second antenna array elements in the beacon antenna are arranged in the manner of uniform linear array, ULA; or
    the beacon antenna comprises a ULA formed by arranging the plurality of second antenna array elements and a uniform planar array, UPA formed by arranging the plurality of second antenna array elements.

11. The wireless charging apparatus according to any one of claims 1 to 10, wherein the wireless charging module further comprises a second rectifying circuit, and the second rectifying circuit is configured to be electrically connected to a corresponding millimeter wave communication antenna.

12. The wireless charging apparatus according to claim 11, wherein the wireless charging module further comprises a radio frequency switch, a first end of the radio frequency switch is configured to be electrically connected to the corresponding millimeter wave communication antenna, a second end of the radio frequency switch is electrically connected to the second rectifying circuit, a third end of the radio frequency switch is electrically connected to a communication circuit corresponding to the millimeter wave communication antenna, the first end of the radio frequency switch is connected to the second end of the radio frequency switch when a control end of the radio frequency switch receives a first control signal, and the first end of the radio frequency switch is connected to the third end of the radio frequency switch when the control end of the radio frequency switch receives a second control signal.

13. The wireless charging apparatus according to any one of claims 1 to 10, further comprising at least one wireless charging signal transmitting module, wherein the wireless charging signal transmitting module is arranged on the charging module carrier.

14. A method for controlling a wireless charging apparatus, wherein the wireless charging apparatus is the wireless charging apparatus according to any one of claims 1 to 13, and the method comprises:

determining position information of a wireless charging transmitting apparatus by each of positioning submodules;

transmitting position information of wireless charging receiving antennas of each of charging submodules to the wireless charging transmitting apparatus by the positioning submodules; and

performing beam training on at least one wireless charging receiving antenna, to achieve beam pairing between corresponding wireless charging receiving antenna and the wireless charging transmitting apparatus.

15. The method according to claim 14, wherein before the determining position information of a wireless charging transmitting apparatus by each of positioning submodules, the method further comprises:

transmitting communication handshake messages through each of the positioning submodules; and

the determining position information of a wireless charging transmitting apparatus by each of positioning submodules comprises:

determining the position information of the wireless charging transmitting apparatus according to handshake success information.

16. The method according to claim 15, wherein when the position information of a plurality of wireless charging transmitting apparatuses is determined through handshake message information of the positioning submodules, before the performing beam training on at least one wireless charging receiving antenna, the method further comprises:

traversing wireless charging efficiency and power load information in the handshake success information;

calculating mean wireless charging efficiency and mean power load of each wireless charging transmitting apparatus relative to each wireless charging module according to wireless charging efficiency and power load information of each wireless charging transmitting apparatus; and

determining a wireless charging transmitting apparatus for wireless charging from the plurality of wireless charging apparatuses according to calculated mean wireless charging efficiency and calculated mean power load.

17. The method according to claim 14, wherein the wireless charging receiving antennas having a same orientation are located in a single antenna group, the wireless charging receiving antennas in different antenna groups have different orientations, and the performing beam training on at least one wireless charging receiving antenna comprises: performing beam training on the antenna groups separately.

18. The method according to claim 14, wherein after the performing beam training on at least one wireless charging receiving antenna, the method further comprises:

determining position information of an electronic device comprising the wireless charging apparatus;

determining a reference signal receiving power, RSRP and/or a signal-noise ratio, SNR of each wireless charging antenna when the position information of the electronic device indicates that a position variation amplitude of the wireless charging apparatus is greater than a predetermined threshold; and

determining whether to execute the step of performing beam training on at least one wireless charging receiving antenna according to the RSRP and/or the SNR of each wireless charging antenna.

19. The method according to claim 18, wherein the electronic device comprises a position sensor, and the position information of the electronic device is provided by the position sensor.

20. The method according to any one of claims 14 to 19, further comprising:

determining a battery level;

executing the step of performing beam training on at least one wireless charging receiving antenna on first number of charging submodules when the battery level is below a predetermined percentage of full level; and

executing the step of performing beam training on at least one wireless charging receiving antenna on second number of charging submodules when the battery level exceeds the predetermined percentage of full level, wherein the first number is greater than the second number.

21. The method according to any one of claims 14 to 19, wherein the wireless charging apparatus comprises a radio frequency switch, and the method further comprises:

generating a first control signal after the wireless charging receiving antenna is beam paired with the wireless charging transmitting apparatus; and
transmitting the first control signal to a control end of the radio frequency switch.

22. The method according to claim 21, further comprising:

generating a second control signal when the battery level exceeds the predetermined percentage of full level; and
transmitting the second control signal to the control end of the radio frequency switch.

23. An electronic device, comprising a wireless charging apparatus, a processor and a storage module, wherein the wireless charging apparatus is the wireless charging apparatus according to any one of claims 1 to 13, and the storage module stores an executable program; and
the method according to any one of claims 14 to 22 is executed when the executable program is called by the processor.

24. The electronic device according to claim 23, comprising a plurality of millimeter wave communication antennas, a number of the millimeter wave communication antennas is the same as a number of wireless charging modules, and the millimeter wave communication antennas correspond one to one to the wireless charging modules.

25. A computer-readable storage medium, wherein the computer-readable storage medium storing an executable program, the method according to any one of claims 14 to 22 is implemented when the executable program is called.

Fig. 1

Fig. 2

222a

222b

Wireless charging
receiving antenna

Low-pass/
bandpass filter

Pass-through filter

Fig. 3

$S_0(t)$      $S_1(t)$      $S_2(t)$      $S_{M-1}(t)$

Second array
element 0

Second array
element 1

Second array
element 2

Second array element
M-1

Fig. 4

700

| 0, 1, ..., m-1 1, 1, ..., m-1 | | | m, 1, ..., M-1 m, 1, ..., M-1 | | Millimeter wave communication antenna |
|---|---|---|---|---|---|
| Beacon array element | Horizontal polarization | Vertical polarization | Horizontal polarization | Vertical polarization | |
| N, 1, ..., m-1 | | | m, 1, ..., M-1 | | |

Fig. 5

Calculate distances and angles of a plurality of wireless charging transmitting apparatuses synchronously by means of associated handshake message information of a plurality of millimeter wave array beacon antennas

Traverse wireless charging efficiency and power load information in handshake message information of a millimeter wave array beacon antenna and a wireless charging transmitting apparatus

Calculate mean wireless charging efficiency and mean power load of the wireless charging transmitting apparatuses relative to the millimeter wave array beacon antennas

Determine a determination principle according to a mean value statistical method

Determine and select a wireless charging transmitting apparatus according to an overall mean value rule

Determine and select some wireless charging transmitting apparatuses according to a grouping mean value of beacon antennas in different directions

Perform wireless charging on an electronic device by one or more wireless charging transmitting apparatuses

Fig. 6

Determine position information of a wireless charging transmitting apparatus by each of positioning submodules

S210

Transmit position information of wireless charging receiving antennas of each of charging submodules to the wireless charging transmitting apparatus by the positioning submodules

S220

Perform beam training on each of the wireless charging receiving antennas, and achieve beam pairing between the wireless charging receiving antennas and the wireless charging transmitting apparatus

S230

Fig. 7

Transmit communication handshake messages through each of positioning submodules — S202

Determine position information of a wireless charging transmitting apparatus by each of positioning submodules — S210

Transmit position information of wireless charging receiving antennas of each of charging submodules to the wireless charging transmitting apparatus by the positioning submodules — S220

Perform beam training on each of the wireless charging receiving antennas, and achieve beam pairing between the wireless charging receiving antennas and the wireless charging transmitting apparatus — S230

Determine position information of an electronic device — S240

Determine a reference signal receiving power (RSRP) and/or a signal-noise ratio (SNR) of each wireless charging antenna when the position information of the electronic device indicates that a position variation amplitude of the wireless charging apparatus is greater than a predetermined threshold — S250

Fig. 8

700

200

Fig. 9

Millimeter wave wireless
charging pile (K band)

Millimeter wave wireless
charging pile (Ku band)

Wireless charging receiving antenna

Electronic device

Millimeter wave wireless
charging pile (Ka band)

Fig. 10

Wireless charging
receiving antenna

Millimeter wave
charging pile

Electronic device

Wireless charging transmitting antenna

Wireless charging transmitting antenna

Wireless charging receiving antenna

Wireless charging
receiving antenna

Electronic device

Electronic device

Fig. 11

| Communication detection | Beam control | | Secondary power amplifier | Millimeter wave transmitting planar sub-array |

Signal generator → Preamplifier → Intermediate frequency module

Fig. 12

**INTERNATIONAL SEARCH REPORT**

| International application No. |
|---|
| **PCT/CN2023/080887** |

**A. CLASSIFICATION OF SUBJECT MATTER**

H02J7/02(2016.01)i;H02J50/20(2016.01)i;H04B5/00(2006.01)i;H02J50/90(2016.01)i

According to International Patent Classification (IPC) or to both national classification and IPC

**B. FIELDS SEARCHED**

Minimum documentation searched (classification system followed by classification symbols)

IPC:H02J H04B

Documentation searched other than minimum documentation to the extent that such documents are included in the fields searched

Electronic data base consulted during the international search (name of data base and, where practicable, search terms used)

VEN, CNTXT, CNABS, WOTXT, EPTXT, USTXT, CNKI, IEEE: 无线充电, 终端, 手机, 壳体, 载体, 天线, 位置, 定位, 朝向, 整流, 阵列, 配对, terminal, antenna, shell, receiving, wireless, charging, position, transmitter

**C. DOCUMENTS CONSIDERED TO BE RELEVANT**

| Category* | Citation of document, with indication, where appropriate, of the relevant passages | Relevant to claim No. |
|---|---|---|
| Y | CN 112886994 A (BEIJING XIAOMI MOBILE SOFTWARE CO., LTD.) 01 June 2021 (2021-06-01)<br>description, paragraphs [0046]-[0173], and figures 1-8 | 1-15, 17-25 |
| Y | CN 109193970 A (SHENZHEN HUANBO TECHNOLOGY CO., LTD.) 11 January 2019 (2019-01-11)<br>description, paragraphs [0047]-[0066], and figures 1-4 | 1-15, 17-25 |
| Y | CN 211209701 U (SHENZHEN ONEPLUS TECHNOLOGY CO., LTD.) 07 August 2020 (2020-08-07)<br>description, paragraphs [0034]-[0084], and figures 1-6 | 11-12, 14-15, 17-25 |
| A | CN 108599397 A (SUZHOU WEISI DONGSHAN ELECTRONIC TECHNOLOGY CO., LTD.) 28 September 2018 (2018-09-28)<br>entire document | 1-25 |
| A | CN 208127996 U (QINGDAO ZHONGHAI HUIZHI ENERGY SCIENCE & TECHNOLOGY CO., LTD.) 20 November 2018 (2018-11-20)<br>entire document | 1-25 |

☑ Further documents are listed in the continuation of Box C.    ☑ See patent family annex.

| | |
|---|---|
| *	Special categories of cited documents:<br>"A"	document defining the general state of the art which is not considered to be of particular relevance<br>"D"	document cited by the applicant in the international application<br>"E"	earlier application or patent but published on or after the international filing date<br>"L"	document which may throw doubts on priority claim(s) or which is cited to establish the publication date of another citation or other special reason (as specified)<br>"O"	document referring to an oral disclosure, use, exhibition or other means<br>"P"	document published prior to the international filing date but later than the priority date claimed | "T"	later document published after the international filing date or priority date and not in conflict with the application but cited to understand the principle or theory underlying the invention<br>"X"	document of particular relevance; the claimed invention cannot be considered novel or cannot be considered to involve an inventive step when the document is taken alone<br>"Y"	document of particular relevance; the claimed invention cannot be considered to involve an inventive step when the document is combined with one or more other such documents, such combination being obvious to a person skilled in the art<br>"&"	document member of the same patent family |

| Date of the actual completion of the international search | Date of mailing of the international search report |
|---|---|
| **14 April 2023** | **20 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/080887**

**C.    DOCUMENTS CONSIDERED TO BE RELEVANT**

| Category* | Citation of document, with indication, where appropriate, of the relevant passages | Relevant to claim No. |
|---|---|---|
| A | US 2021135502 A1 (BEIJING XIAOMI MOBILE SOFTWARE CO., LTD.) 06 May 2021 (2021-05-06) entire document | 1-25 |

Form PCT/ISA/210 (second sheet) (July 2022)

**INTERNATIONAL SEARCH REPORT**
Information on patent family members

International application No.

**PCT/CN2023/080887**

| Patent document cited in search report | | | Publication date (day/month/year) | Patent family member(s) | | | Publication date (day/month/year) |
|---|---|---|---|---|---|---|---|
| CN | 112886994 | A | 01 June 2021 | CN | 112886994 | B | 06 May 2022 |
| CN | 109193970 | A | 11 January 2019 | CN | 109193970 | B | 30 July 2021 |
| CN | 211209701 | U | 07 August 2020 | None | | | |
| CN | 108599397 | A | 28 September 2018 | CN | 207732518 | U | 14 August 2018 |
| CN | 208127996 | U | 20 November 2018 | None | | | |
| US | 2021135502 | A1 | 06 May 2021 | EP | 3817190 | A1 | 05 May 2021 |
| | | | | US | 11322989 | B2 | 03 May 2022 |
| | | | | CN | 112769251 | A | 07 May 2021 |
| | | | | IN | 202024048005 | A | 07 May 2021 |
| | | | | CN | 112769251 | B | 22 November 2022 |

Form PCT/ISA/210 (patent family annex) (July 2022)

**REFERENCES CITED IN THE DESCRIPTION**

**Patent documents cited in the description**

- CN 202210663259